# EUROPÄISCHE PATENTSCHRIFT

(11) **EP 3 289 285 B1**
(45) Veröffentlichungstag und Bekanntmachung des Hinweises auf die Patenterteilung: **27.11.2019**
(21) Anmeldenummer: 16719372.1
(22) Anmeldetag: 25.04.2016
(51) Int. Cl.: F23D 14/22, F23N 3/00, F23N 5/00, F23C 6/04

(54) **VERFAHREN ZUM BETRIEN EINES CALCINATORS**
METHOD OF OPERATING A CALCINER
PROCÉDÉ D'OPERATION D' UN CALCINER

(30) Priorität: 29.04.2015 DE 102015005416
(43) Veröffentlichungstag der Anmeldung: 07.03.2018
(73) Patentinhaber: KHD Humboldt Wedag GmbH, 51067 Köln (DE)
(72) Erfinder: SCHRÖDER, Ernst, 4760 Büllingen (BE); KNOCH, Alex, 53797 Lohmar (DE); KLUTHE, Karin, 50321 Hürth (DE); LOGGIA, Giovanni, 50354 Hürth (DE); HEUSER, Martin, 51674 Wiehl (DE); LIEDKTE, Silke, 47804 Krefeld (DE); ALBRECHT, Michael, 53797 Lohmar (DE)
(86) Internationale Anmeldenummer: PCT/EP2016/059193
(87) Internationale Veröffentlichungsnummer: WO 2016/173991

(56) Entgegenhaltungen:
- EP-A1- 1 136 443
- EP-A2- 2 166 284
- DE-A1- 3 807 214
- DE-A1- 10 327 201
- DE-T2- 3 852 651
- US-A1- 2003 175 646

## Beschreibung

Die Erfindung betrifft ein Verfahren zum Betrieb eines Calcinators in einer Anlage zur Herstellung von Zementklinker.

Zur Herstellung von Zementklinker wird ein Gemisch aus kalkhaltigem Gestein und aus silikathaltigem Gestein vermahlen und einer Wärmebehandlung unterzogen, bei welcher der Kalk formell von Kohlendioxid (CO₂) befreit und in gebrannten Kalk (CaO) überführt wird. In einem weiteren Schritt wird das durch die formelle CO₂-Befreiung entsäuerte Rohmehl, das aus dem ursprünglich nicht entsäuerten kalkhaltigem Gestein und aus dem bis hier noch unveränderten silikathaltigem Gestein besteht, in der Hitze zu verschiedenen Calciumsilikatphasen gesintert. Beim Einsatz von Gas als Brennstoff zum Heizen von Calcinatoren einer Anlage zur Herstellung von Zementklinker ergibt sich häufig das Problem, dass methanreiche Gase als Brennstoff trotz ausreichend hoher Zündtemperatur im Brennraum von etwa 800 °C nur unvollständig verbrennen. Dies ist zum einen darauf zurückzuführen dass die Sauerstoffkonzentration der Ofenabgase einer dem Calcinator in Bezug auf die Gasströmungsrichtung vorgeschalteten Drehrohrofens niedriger ist als in atmosphärische Luft. Zwar reicht die absolute Menge des vorhandenen Sauerstoffs, um eine vollständige Verbrennung des Brennstoffs zum Unterhalt der Calcinierung aufrecht zu erhalten, aber die Sauerstoffkonzentration reicht für eine sichere Verbrennung nicht aus. Zum anderen ist dies darauf zurückzuführen, dass das Heißmehl im Calcinator Kohlendioxid (CO₂) abspaltet und Kohlendioxid (CO₂) den Verbrennungsprozess inhibiert. Der Ausbrand der gasreichen Strähnen im Calcinator erfolgt daher häufig erst im an den Calcinator in Bezug auf die Gasströmungsrichtung anschließenden Ofenzyklon an der Stelle, wo sich Feststoff- und Gasphase trennen. Diese verzögerte Verbrennung ist aber unerwünscht, da sie das Tauchrohr des Zyklons unnötig thermisch belastet. Des Weiteren mindert die verzögerte Verbrennung auch die thermische Effizienz der Anlage. Schließlich kann die erhöhte Temperatur im Ofenzyklon dazu führen, dass der Zyklon verstopft, was den Betrieb der Anlage massiv stört und nur durch kostenintensive Abschaltung und Reinigung der Anlage rückgängig gemacht werden kann. Das Dokument US2010/0316969 offenbart den Oberbegriff des Anspruchs 1.

Aufgabe der Erfindung ist es daher, ein Verfahren zur Verfügung zu stellen, welches die vorstehend aufgezählten Nachteile überwindet.

Die der Erfindung zu Grunde liegende Aufgabe wird durch die Merkmale des Anspruchs 1 gelöst. Weitere vorteilhafte Ausgestaltungen sind in den Unteransprüchen zu Anspruch 1 angegeben.

Nach der Erfindung ist vorgesehen, dass ein Teil der Verbrennungsluft schon unmittelbar mit dem Brennstoff in den Brennraum des Brenners gegeben wird. Dabei wird die Luftzufuhr so bemessen, dass eine unterstöchiometrische Verbrennung im Brenner selbst stattfindet. Auf diese Weise wird verhindert, dass sich der Brenner nicht wie eine Düse zum Erzeugen von Schub verhält, in dem im Brennraum eine sehr erhebliche Verbrennungsenergie frei wird, sondern der Brennstoff wird durch die unterstöchiometrische Verbrennung so konditioniert, dass der vollständige Ausbrand unter den sauerstoffarmen Bedingungen in Gegenwart von Kohlendioxid und Heißmehl stattfindet. In der Umgebung des Calcinators ist noch genügend Sauerstoff vorhanden, dass eine vollständige Verbrennung stattfinden kann. Dieser Ausbrand findet tatsächlich aber erst dann statt, wenn die hier beschrieben Konditionierung im Brenner stattfindet. Es wird im Rahmen dieser Erfindung vermutet, dass die Aktivierungsenergie für die Zündung des Brennstoffs, insbesondere das von methanreichem Erdgas zunächst einen hohen Sauerstoffüberschuss in Gegenwart von hoher Temperatur erfordert. Durch die Konditionierung wird das Erdgas als Beispiel für den Brennstoff partiell oxidiert. Nach Beobachtung der Verbrennung mit dem erfindungsgemäßen Brenner brennen die partiell oxidierten Verbrennungsrückstände unter den Bedingungen des Calcinators leichter aus. Es wird so keine verzögerte Verbrennung beobachtet, die im Ofenzyklon oder erst unmittelbar nach dem Calcinator stattfindet.

Zur Vorkonditionierung hat sich ein λ-Wert von 0,05 bis 0,3 als wirksam herausgestellt. In bevorzugter Ausführungsform des erfindungsgemäßen Brenners ist vorgesehen, dass eine Steuerungsvorrichtung, bevorzugt in Form einer Drosselklappe, vorgesehen ist, welche durch eine Einstellung der zugeführten Luft- und Brennstoffströme ein Luft/Brennstoff-Verhältnis λ auf einen Wert von 0,05 bis 0,3 einstellt, wobei vorzugsweise die Steuerungsvorrichtung durch eine Regelungseinrichtung mit einer Regelschleife über eine gemessene Temperatur im Brennerraum und/oder über eine spektrometrisch gemessene Gaskonzentration den erwünschten λ-Wert einstellt.

In einfacher Form der Erfindung ist vorgesehen, dass eine einstellbare Drosselklappe die Luftzufuhr in den Brenner limitiert. Eine einmalige Einstellung der Drosselklappe führt zu einem dauerhaften gleichmäßigen λ-Wert von 0,05 bis 0,3. Es ist nach weiterer Verkörperung der Erfindung vorgesehen, dass eine vorhandene Regelungsvorrichtung die Steuerungsvorrichtung stets so justiert, dass ein gewünschter gleichmäßigen λ-Wert von 0,05 bis 0,3 eingehalten wird. In der Regelschleife wird dabei die Temperatur im Brennerraum gemessen und/oder die Gaszusammensetzung über eine spektrometrisch arbeitende λ-Sonde festgestellt. Um den erwünschten λ-Wert von 0,05 bis 0,3 aufrecht zu erhalten, wird bei einem Absinken der gemessenen Temperatur oder bei einer Verringerung der Konzentration von typischen Verbrennungsprodukten, die über die spektrometrisch arbeitende λ-Sonde gemessen wird, die Luftzufuhr erhöht und anders herum. Es ist auch möglich, sowohl die gemessene Temperatur und auch die Gaszusammensetzung, gemessen über die spektrometrisch arbeitende λ-Sonde mit Hilfe eines Rechenmodells für die Steuerung der Luftzufuhr zu nutzen.

In einfacher, sehr robuster Ausführungsform genügt es, wenn ein einfacher Flammwächter vorhanden ist, der das Ausbleiben der Konditionierung in Form einer partiellen Verbrennung /Oxidation feststellt und wenn die einfache Regelungsvorrichtung bei detektiertem Ausbleiben der Verbrennung die Luftzufuhr erhöht und umgekehrt. Gegenüber der kontinuierlich arbeitenden Regelungsvorrichtung mit kontinuierlichen Werten Temperatur und Verbrennungsgaskonzentration, arbeitet die Regelung mit einem Flammwächter auf einer zwei-Punkt-Basis, mit den Zuständen "Flamme genügt" und "Flamme genügt nicht (mehr)". In weiterer Ausgestaltung der Erfindung ist vorgesehen, dass im Bereich der Mischung von Brennstoff und Luft als Oxidationsmitte eine ringförmig angeordnete Gruppe von einen Spiralwirbel bildenden Düsen angeordnet ist, über welche sich der Brennstoff mit der zentral eingedüsten Luft vermischt. Als Oxidationsmittel kann im einfachsten Fall Tertiärluft dienen, die als vorgeheizte Luft die partielle Verbrennung des Brennstoffes, hier als Beispiel methanreiches Erdgas, unterhält. Je nach Methankonzentration im Erdgas, das häufig durch weitere, schlecht brennbare Gase begleitet wird, wie Stickstoff (N₂) als sehr schwer entflammbar, und Schwefelkohlenstoff (H₂S) als schlecht brennbar in Bezug auf die erwünschte Wärmeleistung, kann vorgesehen sein, ein Oxidationsmittel in Form von sauerstoffangereicherter Luft als Oxidationsmittel vorzusehen. Es kommen auch mit Ammoniak oder Aminen angereicherte Luft in Frage, beispielsweise um die Stickoxidkonzentration zu kontrollieren. Die Anordnung der Düsen ermöglicht die Flammformung. Die Flamme kann als laminare Flamme oder als Wirbelflamme ausgebildet werden, um die Form des Flammkegels oder auch die Flammlänge zu kontrollieren.

Für Brennstoffe, die ein ungleichmäßiges Zündverhalten aufweisen, wie Erdgas mit schwankendem Methangehalt, kann ein Zündbrenner vorgesehen sein. Hierzu ist vorgesehen, dass mindestens ein zusätzlicher Zündbrenner vorhanden ist, welcher im Bereich der Brennkammer das eingedüste Brennstoff/ Oxidationsmittelgemisch sicher zündet. Der Zündbrenner wird seinerseits mit verlässlichen Brennstoffen mit gleichmäßiger Zündneigung betrieben, um die wesentlich größere Menge Brennstoff in dem Brenner zu zünden und um die Verbrennungsflamme aufrecht zu erhalten. Die Zündung kann bei geeigneten Brennstoffen aber auch durch einen elektrischen Zünder geschehen, der beispielsweise über kontinuierliche Lichtbögen, über Lichtbogenpulse oder einen Heißdraht die Zündung verursacht.

Da die Zündung bereits im Brenner stattfindet, ist es notwendig, den Brenner selbst zu kühlen, damit die Wandungen des Brenners nicht verbrennen und vorzeitig altern. Hierzu ist vorgesehen, dass die inneren Wandungen des Brenners mindestens eine Luftansaugdüse aufweisen, durch welche angesaugte Umgebungsluft in den Brenner im Bereich der Wandungen des Brenners einströmt und dadurch die inneren Wandungen des Brenners kühlt.

Die Erfindung wird anhand der folgenden Figuren näher erläutert. Es zeigt:

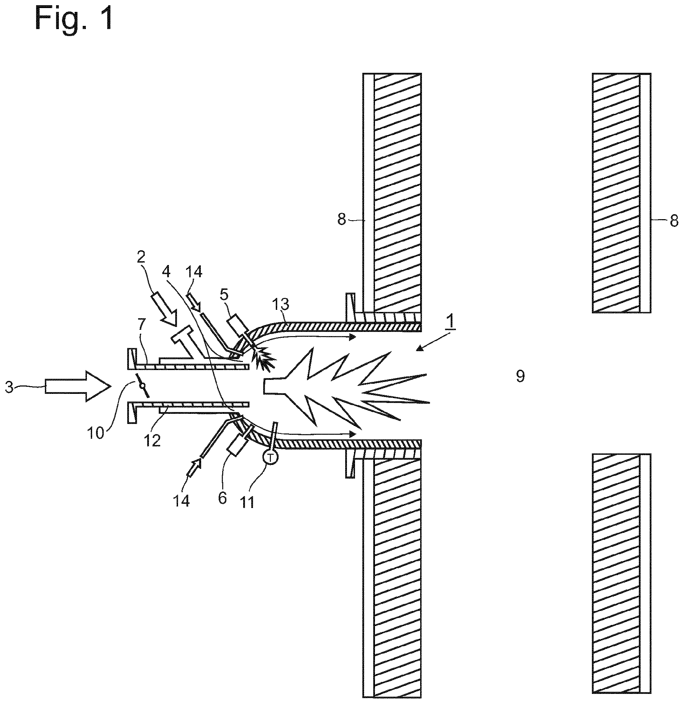

- Fig. 1: einen senkrechten Querschnitt durch einen erfindungsgemäßen Brenner

In **Figur 1** ist ein senkrechter Schnitt durch eine erfindungsgemäße Brennkammer 1 dargestellt, in welcher das Brenngas 2 mit einem Oxidationsmittel 3, vorzugsweise heißer Tertiärluft aus dem Klinkerkühler oder Ofenabgas mit ausreichend Restsauerstoff, vermischt und unterstöchiometrisch verbrannt wird. Dabei wird im Nominalbetrieb ein Luft/Brennstoff-Verhältnis λ von 0,05-0,3 angestrebt, das abhängig von der für den Calcinationsprozess benötigten Brennstoffmenge durch Regelung der Zuflussmenge des Oxidationsmittels 3 mit einer Drosselklappe 10 eingestellt werden kann. Das in der Brennkammer 1 entstehende, reaktive und brennbare Gasgemisch kann dann im Calcinatorinnenraum 9 mit dem Hauptteil der Tertiärluft aus dem Klinkerkühler und dem Restsauerstoff des Ofenabgases ausbrennen.

Zur Mischung von Oxidationsmittel 3 und Brenngas 2 wird ein Injektor 4 verwendet, bei dem durch Fließgeschwindigkeit des Brenngases 2 das Oxidationsmittel 3 in den Reaktionsraum gesogen wird. Dieser Injektor 4 kann erfindungsgemäß als Ringspalt, Düsenring oder auch verdrallt, d. h. tangential angestellt zur Längsachse, angeordnet sein.

Sollte die Temperatur des Oxidationsmittels 3 für eine sichere Zündung nicht ausreichen, kann die Reaktion durch einen geeigneten Zündbrenner 5, alternative durch eine elektrische Zündvorrichtung initiiert werden. Zur Überwachung der Reaktion kann ein optischer Flammwächter 6, aber auch ein Thermoelement 11 eingesetzt werden.

Die Wandung der Brennkammer 1 und des Zuführrohrs 7 für das Oxidationsmittel 3 können durch geeignete feuerfeste Materialien 12 und 13, aber auch durch einen Film aus angesaugter Umgebungsluft 14 vor den hohen Temperaturen und Reaktionsprodukten geschützt werden.

**BEZUGSZEICHENLISTE**

| | | | |
|---|---|---|---|
| 1 | Brennkammer | 8 | Calcinatoraußenwand |
| 2 | Brenngas | 9 | Calcinatorinnenraum |
| 3 | Oxidationsmittel | 10 | Drosselklappe |
| 4 | Injektor | 11 | Thermoelement |
| 5 | Zündbrenner | 12 | feuerfestes Material |
| 6 | Flammwächter | 13 | feuerfestes Material |
| 7 | Zuführrohr | 14 | Umgebungsluft |

## Patentansprüche

1. *Verfahren zum Betrieb eines Calcinators in einer Anlage zur Herstellung von Zementklinker, in welchem Kalk (CaCO₃) als Heißmehl formell von Kohlendioxid (CO₂) befreit und in gebrannten Kalk (CaO) überführt wird unter Einsatz eines Gasbrenners zum Einsatz in sauerstoffarmer Umgebung, deren Sauerstoffkonzentration nicht zum Unterhalt einer vollständigen Verbrennung ausreicht, wobei*
- *methanreiches Erdgas als Brennstoff eingesetzt wird,* wobei
- *der Brenner eine zentrale Luftzufuhr (7) aufweist, die ringförmig von einer Gaszufuhr (4) umgeben ist,* **dadurch gekennzeichnet, dass**
- *die Luftzufuhr so bemessen ist, dass eine unterstöchiometrische Verbrennung im Gasbrenner selbst stattfindet*
*wodurch der Brennstoff durch die unterstöchiometrische Verbrennung so konditioniert wird, dass der vollständige Ausbrand unter den sauerstoffarmen Bedingungen im Calcinator in Gegenwart von Kohlendioxid und Heißmehl stattfindet, wobei*
im Bereich der Mischung von Brennstoff (2) und Luft als Oxidationsmittel (3) eine ringförmig angeordnete Gruppe von einen Spiralwirbel bildenden Düsen (4) angeordnet ist, über welche sich der Brennstoff mit der zentral eingedüsten Luft vermischt.

2. Verfahren nach Anspruch 1,
**dadurch gekennzeichnet, dass**
eine Steuerungsvorrichtung, bevorzugt in Form einer Drosselklappe (10), vorgesehen ist, welche durch eine Einstellung der zugeführten Luft- und Brennstoffströme ein Luft/Brennstoff-Verhältnis λ auf einen Wert von 0,05 bis 0,3 einstellt,
wobei vorzugsweise die Steuerungsvorrichtung (10) durch eine Regelungseinrichtung mit einer Regelschleife über eine gemessene Temperatur im Brennerraum und/oder über eine spektrometrisch gemessene Gaskonzentration den erwünschten λ-Wert einstellt.

3. Verfahren nach einem der Ansprüche 1 bis 2,
**dadurch gekennzeichnet, dass**
mindestens ein zusätzlicher Zündbrenner (5) vorhanden ist, welcher im Bereich der Brennkammer (1) das eingedüste Brennstoff (2) /Oxidationsmittel (3) - Gemisch sicher zündet.

4. Verfahren nach einem der Ansprüche 1 bis 3,
**dadurch gekennzeichnet, dass**
die inneren Wandungen des Brenners mindestens eine Luftansaugdüse aufweisen, durch welche angesaugte Umgebungsluft (14) in den Brenner im Bereich der Wandungen des Brenners einströmt und dadurch die inneren Wandungen des Brenners kühlt.

## Claims

1. Method for operating a calcinator in a plant for producing cement clinker, in which lime (CaCO₃) as hot meal is formally freed of carbon dioxide (CO2) and converted into burnt lime (CaO) using a gas burner for use in an oxygen-impoverished environment, the oxygen concentration of which is insufficient for supporting a complete combustion, wherein
- methane-rich natural gas is used as fuel, wherein
- the burner has a central air supply pipe (7) which is annularly encompassed by a gas supply pipe (4), **characterized in that**
- the air supply pipe is of such dimensions that a substoichiometric combustion takes place in the burner itself,
whereby the fuel is conditioned as a result of the substoichiometric combustion so that the complete burnout takes place under the oxygen-impoverished conditions in the calcinator in the presence of carbon dioxide and hot meal, wherein in the region of the mixing of fuel (2) and air as oxidation means (3) an annularly disposed group of nozzles (4), forming a spiral vortex, is arranged, via which the fuel is mixed with the centrally injected air.

2. Method according to Claim 1,
**characterized in that**
provision is made for a control device, preferably in the form of a throttle valve (10), which by an adjustment of the supplied air flow and fuel flow sets an air/fuel ratio λ to a value of 0.05 to 0.3,
wherein the control device (10), by means of a closed-loop control device with a control loop, preferably sets the desired λ value via a measured temperature in the combustion chamber and/or via a spectrometrically measured gas concentration.

3. Method according to either of Claims 1 and 2,
**characterized in that**
provision is made for at least one additional pilot burner (5) which in the region of the combustion chamber (1) reliably ignites the mixture of injected fuel (2) and oxidation means (3).

4. Method according to one of Claims 1 to 3,
**characterized in that**
the inner walls of the burner have at least one air suction nozzle by means of which sucked-in ambient air (14) flows into the burner in the region of the walls of the burner and as a result cools the inner walls of the burner.

## Revendications

1. Procédé de fonctionnement d'un calcinateur dans une installation de production de clinker de ciment, procédé dans lequel de la chaux (CaCO₃) se présentant sous la forme de farine chaude est formellement dépourvue de dioxyde de carbone (CO₂) et transformée en chaux vive (CaO) à l'aide d'un brûleur à gaz destiné à être utilisé dans un environnement appauvri en oxygène dont la concentration en oxygène n'est pas suffisante pour assurer une combustion complète,
- du gaz naturel riche en méthane étant utilisé comme carburant,
- le brûleur comportant une alimentation en air centrale (7) qui est entourée annulairement par une alimentation en gaz (4), **caractérisé en ce que**
- l'alimentation en air est dimensionnée de telle sorte qu'une combustion stœchiométrique se produit dans le brûleur à gaz lui-même,
de sorte que le combustible est conditionné par la combustion sous-stoechiométrique de sorte que la combustion complète se produise dans les conditions pauvres en oxygène dans le calcinateur en présence de dioxyde de carbone et de farine chaude,
un groupe de buses, formant un vortex en spirale (4), qui permet de mélanger le combustible à l'air injecté de manière centrale, est disposé annulairement dans la région du mélange de combustible (2) et d'air utilisé comme agent oxydant (3).

2. Procédé selon la revendication 1,
**caractérisé en ce que**
un dispositif de commande, se présentant de préférence sous la forme d'un volet d'étranglement (10), est prévu, lequel règle le rapport air/combustible λ à une valeur de 0,05 à 0,3 par réglage des débits d'air et de combustible amenés,
de préférence le dispositif de commande (10) réglant la valeur λ souhaitée au-dessus d'une température mesurée dans la chambre du brûleur et/ou d'une concentration en gaz mesurée par spectrométrie à l'aide d'un dispositif de régulation comportant une boucle de régulation.

3. Procédé selon l'une des revendications 1 et 2,
**caractérisé en ce que**
au moins une veilleuse supplémentaire (5) est présente, laquelle enflamme en toute sécurité le mélange combustible (2)/oxydant (3), qui a été injecté, dans la région de la chambre de combustion (1).

4. Procédé selon l'une des revendications 1 à 3,
**caractérisé en ce que**
les parois intérieures du brûleur comportent au moins une buse d'admission d'air par laquelle de l'air ambiant aspiré (14) s'écoule jusque dans le brûleur dans la région des parois du brûleur et refroidit ainsi les parois intérieures du brûleur.
